# EUROPEAN PATENT APPLICATION

(11) **EP 3 825 941 A1**
(43) Date of publication of application: **26.05.2021**
(21) Application number: 19837576.8
(22) Date of filing: 22.04.2019
(51) Int. Cl.: G06Q 20/10

(54) **METHOD AND APPARATUS FOR ISSUING REWARD TO WORK PUBLISHER BASED ON BLOCKCHAIN**

(30) Priority: 18.07.2018 CN 201810808773
(71) Applicant: Advanced New Technologies Co., Ltd., George Town, Grand Cayman KY1-9008 (KY)
(72) Inventor: YANG, Xinying, Hangzhou, Zhejiang 311121 (CN)
(74) Representative: Bryn-Jacobsen, Caelia
(86) International application number: PCT/CN2019/083672
(87) International publication number: WO 2020/015414

(57) **Abstract**

Disclosed are a method and device of issuing a reward to a work publisher on the basis of a blockchain. A blockchain network includes a plurality of service nodes, the service nodes have authorities to publish works to the blockchain, and the plurality of service nodes use a virtual resource as a transfer medium to conduct copyright-related transfers. For a service node publishing a work, a reward is issued to the service node by means of a consensus mechanism in the blockchain network, such that virtual resources corresponding to the service node are increased.

## Description

### CROSS-REFERENCE TO RELATED APPLICATIONS

This application claims priority to Chinese Patent Application No. 201810808773.0, filed on July 18, 2018 and entitled "METHOD AND DEVICE OF ISSUING REWARD TO WORK PUBLISHER ON THE BASIS OF BLOCKCHAIN," which is incorporated herein by reference in its entirety.

### TECHNICAL FIELD

The present application relates to the field of information technology, in particular to a method and device of issuing a reward to a work publisher on the basis of a blockchain.

### BACKGROUND

As the market attaches more and more importance to the copyright of works, copyright service platforms emerge as the times require. Creators of works can register as users on a copyright service platform, upload their works to the copyright service platform, conduct copyright-related transfers with other users, and obtain copyright income.

Copyright-related transfers refer to various transfer activities carried out on the basis of the copyright of works. For example, user A grants the property rights of the copyright of the works created by himself/herself (such as right of copy, right of distribution, right of adaptation, and right of performance) to user B, and charges a copyright license fee. For another example, user B uses the works created by user A (for example, enjoys the works, downloads the works, etc.) and pays work use fee to user A.

In practice, in order to attract creators to upload their works, the copyright service platform will issue rewards, such as cash, to users who upload works. Specifically, when it monitors that a user uploads a work, the server of the copyright service platform will add a certain amount of money to an account corresponding to the user ID of the user as a reward.

For this reason, a more open and credible method of issuing rewards to work publishers is needed.

### SUMMARY

In order to solve the problem that the existing method of issuing rewards to work publishers is not open and credible, the present application provides a blockchain-based method and device for performing credit evaluation to work publishers. The technical solution is as follows:

According to the first aspect of an embodiment of the present application, provided is a blockchain-based method of issuing a reward to a work publisher, wherein a blockchain network comprises a plurality of service nodes, the service nodes have authorities to publish works to the blockchain, a virtual resource is used as a transfer medium among the plurality of service nodes to conduct copyright-related transfers, and the method comprises:

when it is monitored that a target node publishes a target work to the blockchain, determining an increment in the virtual resource, wherein the target node is any of the service nodes;.

constructing a publisher reward transfer on the basis of a node identification of the target node and the determined increment in the virtual resource; and

broadcasting the publisher reward transfer to the blockchain network, such that after a plurality of nodes in the blockchain network pass a consensus verification of the publisher reward transfer, a corresponding relationship between the node identification and the determined increment in the virtual resource is established and stored in a blockchain.

According the second aspect of an embodiment of the present application, provided is a blockchain-based device of issuing a reward to a work publisher, wherein a blockchain network comprises a plurality of service nodes, the service nodes have authorities to publish works to the blockchain, a virtual resource is used as a transfer medium among the plurality of service nodes to conduct copyright-related transfers, and the device is a node in the blockchain network; and
the device comprises:
a determination module, configured to, when it is monitored that a target node publishes a target work to the blockchain, determine an increment in the virtual resource, wherein the target node is any of the service nodes;
a construction module, configured to construct a publisher reward transfer on the basis of a node identification of the target node and the determined increment in the virtual resource;
a broadcasting module configured to broadcast the publisher reward transfer to the blockchain network, such that after a plurality of nodes in the blockchain network pass a consensus verification of the publisher reward transfer, a corresponding relationship between the node identification and the determined increment in the virtual resource is established and stored in a blockchain.

According the third aspect of an embodiment of the present application, provided is a blockchain-based system of issuing a reward to a work publisher, the system comprises a blockchain network at least consisting of a plurality of service nodes, wherein the service nodes have authorities to publish works to the blockchain, and a virtual resource is used as a transfer medium among the plurality of service nodes to conduct copyright-related transfers;
any one node in the blockchain network is configured to, when it is monitored that a target node publishes a target work to the blockchain, determine an increment in the virtual resource; wherein the target node is any of the service nodes; construct a publisher reward transfer on the basis of a node identification of the target node and the determined increment in the virtual resource; and broadcast the publisher reward transfer to the blockchain network;
after a plurality of nodes in the blockchain network pass a consensus verification of the publisher reward transfer, a corresponding relationship between the node identification and the determined increment in the virtual resource is established and stored in a blockchain.

In the technical solution provided by an embodiment of the present application, a blockchain network comprises a plurality of service nodes, the service nodes have authorities to publish works to the blockchain, a virtual resource is used as a transfer medium among the plurality of service nodes to conduct a copyright-related transfers. For a service node publishing a work, a reward is issued to the service node by means of a consensus mechanism in the blockchain network, such that virtual resources corresponding to the service node are increased. The process of issuing the reward to the service node publishing the work is implemented through the participation of a plurality of nodes in the blockchain network by means of a consensus mechanism. Moreover, the record of issuing the reward to the service node is stored in the blockchain by the plurality of nodes for publicity, and the data stored in the blockchain cannot be tampered with. Accordingly, it can be seen that, in the present application, the process of issuing a reward to the work publisher is open and the record of issuing the reward to the work publisher is credible.

It should be understood that the above general description and the following detailed description are only exemplary and explanatory, and should not limit the present application.

In addition, any embodiment of the present application is not required to achieve all of the above effects.

### BRIEF DESCRIPTION OF THE DRAWINGS

In order to more clearly describe the technical solutions in the present application or the prior art, the drawings needed in the description of the present application or the prior art will be briefly introduced below. Apparently, the drawings in the description below are only some embodiments of the present application, and those skilled in the art may obtain other drawings according to these drawings.
FIG. 1 is a flowchart of a method of issuing a reward to a work publisher on the basis of a blockchain provided by one embodiment of the present application.
FIG. 2 is a structural schematic diagram of a device of issuing a reward to a work publisher on the basis of a blockchain provided by one embodiment of the present application.
FIG. 3 is a structural schematic diagram of a system of issuing a reward to a work publisher on the basis of a blockchain provided by one embodiment of the present application.
FIG. 4 is a structural schematic diagram of a computer apparatus for configuring a method provided by one embodiment of the present application.

### DETAILED DESCRIPTION

At present, in the application scenarios of copyright service, in order to encourage the publication of works, rewards are usually issued to publishers. However, the existing method of issuing rewards to publishers is mainly implemented by servers of a copyright service platform, and the entire process of issuing rewards is not open and transparent enough. Moreover, reward issuance records stored on the servers of the copyright service platform corresponding to each work publisher may also be tampered with. The situation that the copyright service platform repudiates a debt to work publishers often occurs. That is to say, the credibility of this method of issuing rewards to work publishers is not high, and the incentive effect on work publishers is not good.

In order to solve this problem, the present application firstly provides a blockchain-based copyright-related transfer method, and then, on the basis of this copyright-related transfer method, provides a method of issuing a reward to a work publisher.

Specifically, in the blockchain-based copyright-related transfer method, a blockchain network includes a plurality of service nodes, the service nodes have authorities to publish works to the blockchain, and the plurality of service nodes use virtual resources as a transfer medium to conduct copyright-related transfers.

Further, the blockchain network also includes a management node, and the plurality of service nodes use virtual resources issued by the management node as a transfer medium to conduct copyright-related transfers. Virtual resources corresponding to each service node can be exchanged into property through the management node.

A typical copyright-related transfer may be described as follows:

Aiming at a copyright-related transfer event corresponding to a target work, a payer node determines a payment amount, and the payer node is a service node corresponding to a user who uses or purchases the target work.

The payer node determines the payment amount of virtual resource as a virtual resource decrement corresponding to the payer node, and determines the payment amount of virtual resources as an increment in the virtual resource corresponding to a publisher node; the publisher node is a service node corresponding to a user who publishes the target work.

The payer node constructs a payment transfer including the virtual resource decrement corresponding to the payer node and the increment in the virtual resource corresponding to the publisher node, and publishes the payment transfer to the blockchain.

The virtual resources are actually a type of electronic data, and the specific form thereof may be game currency, points, virtual goods, etc. For the convenience of description, in the following examples, the work is specifically a musical work, and the virtual resources are specifically "TON," and one unit of virtual resource is one TON. TON originates from tone (music tone or color tune). At the same time, ton itself has the meaning of weight, and symbolizes value and density, so it is determined as the name.

The payment amount specifically refers to the amount of virtual resources needed to use or purchase the target work, which may be preset by the publisher of the target work.

That is to say, in the above copyright-related transfer method, the meaning of the payment transfer being published to the blockchain is that a work buyer or user pays virtual resources to a work publisher, and the payment record of the virtual resources is stored in the blockchain to be made public.

Through the abovementioned copyright-related transfer method, a service node may be a payer paying virtual resources in some copyright-related transfer events, and may be a publisher receiving virtual resources in some copyright-related transfer events. A virtual resource payment record corresponding to each copyright-related transfer event will be stored in the blockchain for publicity. On the basis of the virtual resource payment record stored in the blockchain, the stock of virtual resources corresponding to each service node can be determined.

It should be noted that transfers described in the description may be property exchange activities in a common sense, such as copyright-related transfers (purchase of copyrighted works, use of copyrighted works, etc.). In addition, in the sense of blockchain, a transfer may also be referred to a set of data that is created by users through clients of the blockchain and needs to be eventually published to a distributed database of the blockchain.

The transfers in the blockchain may be divided into narrow-sense transfers and broad-sense transfers. A narrow-sense transfer refers to a value transfer published by a user to the blockchain; for example, in a traditional bitcoin blockchain network, a transfer may be an account transfer initiated by a user in the blockchain. A broad-sense transfer refers to service data with service intention published by a user to the blockchain; for example, an operator may build a consortium blockchain on the basis of the actual service needs, and deploy some other types of online services unrelated to value transfers (for example, house-rental services, vehicle scheduling services, insurance-claim services, credit services, medical services, etc.) relying on the consortium blockchain. In this consortium blockchain, a transfer may be a service message or a service request with service intentions published by a user in the consortium blockchain.

Herein, except expressions of copyright-related transfers and copyright transfers, other "transfers" generally refer to transfers in the sense of blockchain.

On the basis of the abovementioned blockchain-based copyright-related transfer method, the present application provides a method of issuing a reward to a work publisher. For a service node that publishes a work, a reward is issued to the service node by means of a consensus mechanism in the blockchain network, such that virtual resources corresponding to the service node are increased. The process of issuing the reward to the service node publishing the work is implemented through the participation of a plurality of nodes in the blockchain network by means of a consensus mechanism. Moreover, the record of issuing the reward to the service node is stored in the blockchain by the plurality of nodes for publicity, and the data stored in the blockchain cannot be tampered with. Accordingly, it can be seen that, in the present application, the process of issuing the reward to the work publisher is open and the record of issuing the reward to the work publisher is credible.

In order to enable those skilled in the art to better understand the technical solutions in the present application, the technical solutions in the present application will be described clearly and completely below with reference to the drawings in the present application. It is apparent that the described embodiments are merely some, rather than all, of the embodiments of the present application. All other embodiments obtained by those skilled in the art on the basis of the embodiments in the present application shall fall within the scope of protection of the present application.

The technical solutions provided by the embodiments of the present application will be described below in detail with reference to the drawings.

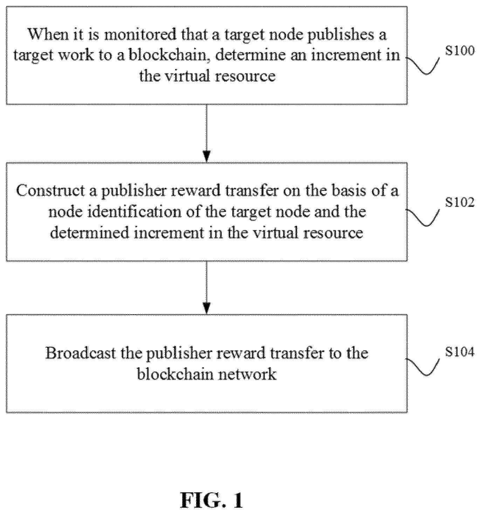

FIG. 1 is a flowchart of a method of issuing a reward to a work publisher on the basis of a blockchain provided by one embodiment of the present application, which includes the following steps:

In S100, an increment in the virtual resource is determined when it is monitored that a target node publishes a target work to a blockchain.

In the embodiment of the present application, a blockchain network includes a plurality of service nodes, the service nodes have authorities to publish works to the blockchain, and the plurality of service nodes use virtual resources as a transfer medium to perform copyright-related transfers.

At the same time, it should be noted that virtual resource expenditure records and virtual resource income records of each service node are stored in the blockchain. For each service node, a virtual resource expenditure record corresponding to the service node is recorded in a form of a node ID of the service node corresponding to a certain virtual resource decrement, for example, "node A: -20," which means node A spends 20 TONs; a virtual resource income record corresponding to the service node is recorded in a form of the node ID of the service node corresponding to a certain increment in the virtual resource, for example, "node A: 20," which means node A gains 20 TONs.

In addition, for each service node, a stock of virtual resources corresponding to the service node may be obtained by backtracking the blockchain and merging the increment in the virtual resources and the decrement in the virtual resources corresponding to the service node. For example, stored on the blockchain, there are three virtual resource expenditure records of node A, and the corresponding virtual resource decrements are respectively -20, -50 and -60; there are three virtual resource income records, and the corresponding increment in the virtual resources are respectively 50, 63 and 80. Hence, up to now, the stock of virtual resources corresponding to node A is: -20-50-60+50+63+80 = 63 TONs.

An execution subject of the method may be any service node (called execution node) in the blockchain network, and the execution node executes the method illustrated in FIG. 1 by calling a smart contract stored in the blockchain for implementing the flow of the method illustrated in FIG. 1. It should be noted that the execution node may be randomly assigned from the service nodes whenever the method illustrated in FIG. 1 needs to be executed.

It should also be noted that, since the target node is also any service node in the blockchain network, the target node and the execution node may be the same service node.

In addition, a management node may be added to the blockchain network as the execution node. The management node does not participate in the copyright-related transfers, but is responsible for managing copyright-related transfers. The management node usually executes the method illustrated in FIG. 1 by calling a smart contract stored in the blockchain for implementing the flow of the method illustrated in FIG. 1.

Moreover, the management node is generally the issuer of the transfer medium (i.e., virtual resources) used in copyright-related transfers. Any service node can request the management node to exchange its own virtual resources into property. For example, a stock of virtual resources of service node A is 20 TONs. Assuming that a management party corresponding to the management node stipulates that one TON can be converted into 10 RMB, then service node A can request the management node to exchange 20 TONs owned by service node A into 200 RMB

In the embodiment of the present application, the target work is usually any work published to the blockchain. When the execution node monitors that a target node publishes a target work to the blockchain, it can start the process of issuing a reward to the target node, and firstly determines virtual resource to be issued to the target node, that is, an increment in the virtual resource corresponding to the target node.

There are many manners to determine the increment in the virtual resource, when it is monitored that the target node publishes the target work to the blockchain. The following two manners are provided:
Manner 1: a basic increment in the virtual resource is determined. In this case, the determined increment in the virtual resource may only include the basic increment in the virtual resource. Specifically, a preset amount of virtual resources may be determined as the basic increment in the virtual resource; or the preset amount may be reduced according to the preset amount and a preset reduction rule, and the reduced preset amount of virtual resources are determined as the basic increment in the virtual resource.

For example, the preset number may be 5. When it is monitored that the target node publishes the target work to the blockchain, 5 TONs may be determined as the basic increment in the virtual resource. In this case, the determined increment in the virtual resource is 5 TONs.

For another example, the preset amount may be reduced. Specifically, the reduction rule may be preset as "reduce annually by 1." Assuming that the year, in which the preset amount is preset, is 2015, then, by now (2018), the preset amount is reduced to 2. Therefore, 2 TONs may be determined as the basic increment in the virtual resource. In this case, the determined increment in the virtual resource is 2 TONs.

Manner 2: a basic increment in the virtual resource is determined, and at least one of an originality-related increment in the virtual resource, a level-related increment in the virtual resource, and a type-related increment in the virtual resource is determined on the basis of the target work.

In this case, the determined increment in the virtual resource not only includes the basic increment in the virtual resource, but also includes at least one of the originality-related increment in the virtual resource, the level-related increment in the virtual resource, and the type-related increment in the virtual resource.

In the embodiment of the present application, the originality-related increment in the virtual resource may be determined by adopting the following manner:

Originality analysis is performed to the target work according to published works in the blockchain to obtain an originality representation value corresponding to the target work, and the originality representation value is positively correlated to the degree of originality of the target work; the originality-related increment in the virtual resource is determined according to the originality representation value and the basic increment in the virtual resource, the originality representation value is positively correlated to the originality-related increment in the virtual resource, and the basic increment in the virtual resource is positively correlated to the originality-related increment in the virtual resource.

The originality analysis directed to the target work usually refers to comparing the digital form of the target work with the digital forms of reference works in a work database by means of digital analysis on the basis of the work database, so as to determine a reference work that is the most similar to the target work as a key reference work from the work database, and obtain the similarity between the target work and the key reference work. This is a technical means well known by those skilled in the art.

The similarity is a value generally between 0% and 100%, representing the degree of similarity between the target work and the key reference work. For example, if the similarity is 20%, it indicates that the target work is 20% similar to the key reference work. Obviously, the higher the similarity, the lower the degree of originality of the target work.

It should be noted that, in the embodiment of the present application, the originality representation value is determined according to the similarity, the similarity is negatively correlated to the originality representation value, and the originality representation value is positively correlated to the degree of originality of the target work. That is, the more similar the target work is to the reference work, the lower the originality representation value, and the lower the degree of originality of the target work. For example, (1-the similarity) may be used as the originality representation value.

In addition, methods used to perform originality analysis on the target work are not limited to the above-mentioned one. Any technical means that can perform the originality analysis on the target work to obtain the corresponding originality representation value of the target work on the basis of the work database can be applied to the embodiment of the present application.

It can be seen that the originality-related increment in the virtual resource means evaluating the degree of originality of the target work published by the target node and, according to the degree of originality of the target work, determining the amount of the originality-related reward to be issued to the target node.

For example, the product of the basic increment in the virtual resource and the originality representation value corresponding to the target work may be used as the originality-related increment in the virtual resource. Assuming that the basic increment in the virtual resource is 5 TONs and the originality representation value corresponding to the target work is 80%, thus, the originality-related increment in the virtual resource is 5^{∗}80% = 4 TONs.

In the embodiment of the present application, the level-related increment in the virtual resource may be determined by adopting the following manner:
A score for representing the creation level of the target work is obtained, and the score is positively correlated to the creation level of the target work; the level-related increment in the virtual resource is determined according to the score and the basic increment in the virtual resource, the score is positively correlated to the level-related increment in the virtual resource, and the basic increment in the virtual resource is positively correlated to the level-related increment in the virtual resource.

The creation level of the target work may be analyzed on the basis of preset evaluation rules to obtain the score corresponding to the target work; or the creation level of the target work may be analyzed on the basis of a pre-trained evaluation model to obtain the score corresponding to the target work; or the score corresponding to the target work specified by a work evaluator may be obtained.

It can be seen that the level-related increment in the virtual resource means evaluating the creation level of the target work published by the target node and determine, according to the creation level of the target work, the amount of the level-related reward to be issued to the target node.

For example, the level-related increment in the virtual resource may be determined according to the basic increment in the virtual resource and the score corresponding to the target work. Assuming that the basic increment in the virtual resource is 5 TONs, the full score of the level of the work is 100, and the score corresponding to the target work is 60, then the level-related increment in the virtual resource is 5^{∗}60/100= 3 TONs.

In the embodiment of the present application, the type-related increment in the virtual resource may be determined by adopting the following manner:
A work type corresponding to the target work is determined as a target work type; a resource amount corresponding to the target work type is determined as a target resource amount according to a corresponding relationship between preset work types and resource amounts; the target resource amount of virtual resources are determined as the type-related increment in the virtual resource.

For example, assuming that the work is a musical work, the preset work types are jazz, folk, and rock, the resource amount corresponding to jazz is 5, the resource amount corresponding to folk is 8, and the resource amount corresponding to rock is 3. If the work type of the target work is jazz, then 5 TONs are determined as the type-related increment in the virtual resource.

It should be noted that the resource amount corresponding to each work type may be adjusted according to the actual service needs. Specifically, a resource amount adjustment instruction may be received; a resource amount corresponding to at least one work type may be adjusted according to the resource amount adjustment instruction.

More specifically, if the corresponding relationship between the work types and the resource amounts is preset through the smart contract, when the resource amount corresponding to at least one work type is adjusted, the smart contract needs to be re-generated on the basis of the adjusted corresponding relationship between the work types and the resource amounts and be published to the blockchain.

In addition, if the originality-related increment in the virtual resource and the level-related increment in the virtual resource have been determined, the type-related increment in the virtual resource may also be determined by adopting the following manner:
A work type corresponding to the target work is determined as a target work type; a coefficient corresponding to the target work type is determined as a target coefficient according to a corresponding relationship between preset work types and coefficients; a sum of the originality-related increment in the virtual resource and the level-related increment in the virtual resource is multiplied by the target coefficient to obtain the type-related increment in the virtual resource.

For example, assuming that the work is a musical work, the preset work types are jazz, folk, and rock, the coefficient corresponding to jazz is 0.5, the coefficient corresponding to folk is 0.8, and the coefficient corresponding to rock is 0.3. In the mean time, the originality-related increment in the virtual resource is 4 TONs and the level-related increment in the virtual resource is 3 TONs, if the work type of the target work is jazz, then (4+3)^{∗}0.5 = 3.5 TONs are determined as the type-related increment in the virtual resource.

It should be noted that the coefficient corresponding to each work type may be adjusted according to the actual service needs. Specifically, a coefficient adjustment instruction may be received; a coefficient corresponding to at least one work type may be adjusted according to the coefficient adjustment instruction.

More specifically, if the corresponding relationship between the work types and the coefficients is preset through the smart contract, when the coefficient corresponding to at least one work type is adjusted, the smart contract needs to be re-generated on the basis of the adjusted corresponding relationship between the work types and the coefficients and be published to the blockchain.

To sum up, if the increment in the virtual resource is determined by adopting the above manner 2, then according to the above examples, the basic increment in the virtual resource is 2 TONs (after gradual reduction from 2015 to 2018), the originality-related increment in the virtual resource is 4 TONs, the level-related increment in the virtual resource is 3 TONs, and the type-related increment in the virtual resource is (4+3)^{∗}0.5 = 3.5 TONs. Hence, the increment in the virtual resource is totally 2+4+3+3.5 = 12.5 TONs.

In S102, a publisher reward transfer is constructed based on a node identification of the target node and the determined increment in the virtual resource.

In S104, the publisher reward transfer is broadcast to the blockchain network.

After the increment in the virtual resource is determined, the increment in the virtual resource may be published to the blockchain. Specifically, as described previously, for any one service node, the virtual resource income record corresponding to the service node is recorded in a form of a node ID of the service node corresponding to a certain increment in the virtual resource. Therefore, a publisher reward transfer may be constructed based on the node ID of the target node and the increment in the virtual resource, and then the publisher reward transfer is broadcast to the blockchain network, such that a plurality of nodes in the blockchain network establish a corresponding relationship between the node identification and the determined increment in the virtual resource and store the corresponding relationship in the blockchain after a consensus verification of the publisher reward transfer passes.

It should be noted here that the plurality of nodes are nodes participating in the consensus verification. The plurality of nodes may be a plurality of service nodes. If the blockchain network includes not only service nodes, but also other nodes, such as management nodes, the plurality of nodes may also include other nodes in addition to the service nodes.

The consensus verification aiming at the publisher reward transfer mainly refers to the plurality of nodes respectively verifying the validity of the publisher reward transfer and reaching a consensus on the validity verification result. Items of y verification at least include verifying whether the signature of the execution node broadcasting the publisher reward transfer is valid, whether the publisher reward transfer is tampered with in the broadcasting process, and so on.

In the method of issuing the reward to the work publisher shown in FIG. 1, for a service node publishing a work, a reward is issued to the service node by means of a consensus mechanism in the blockchain network, such that virtual resources corresponding to the service node are increased. The process of issuing the reward to the service node publishing the work is implemented through the participation of a plurality of nodes in the blockchain network by means of a consensus mechanism. Moreover, the record of issuing the reward to the service node is stored in the blockchain by the plurality of nodes for publicity, and the data stored in the blockchain cannot be tampered with. Accordingly, it can be seen that, in the present application, the process of issuing the reward to the work publisher is open and the record of issuing the reward to the work publisher is credible.

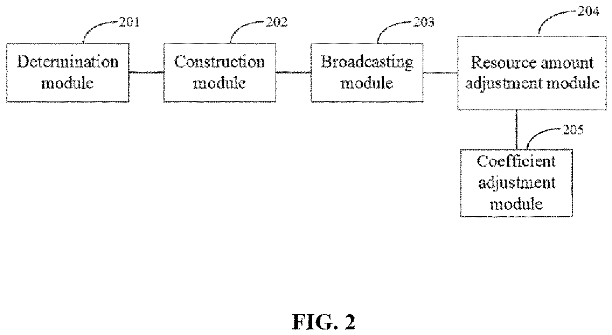

On the basis of the method of issuing the reward to the work publisher shown in FIG. 1, the embodiment of the present application further provides blockchain-based device of issuing a reward to a work publisher, as illustrated in FIG. 2, a blockchain network comprises a plurality of service nodes, the service nodes have authorities to publish works to the blockchain, a virtual resource is used as a transfer medium among the plurality of service nodes to conduct copyright-related transfers, and the device is a node in the blockchain network; and
the device includes:
a determination module 201 configured to, when it is monitored that a target node publishes a target work to the blockchain, determine an increment in the virtual resource, wherein the target node is any of the service nodes;
a construction module 202 configured to construct a publisher reward transfer on the basis of a node identification of the target node and the determined increment in the virtual resource;
a broadcasting module 203 configured to broadcast the publisher reward transfer to the blockchain network, such that, after a plurality of nodes in the blockchain network pass a consensus verification of the publisher reward transfer, a corresponding relationship between the node identification and the determined increment in the virtual resource is established and stored in the blockchain.

The determination module 201 is configured to determine a basic increment in the virtual resource; or determine the basic increment in the virtual resource, and determine, on the basis of the target work, at least one of: an originality-related increment in the virtual resource, a level-related increment in the virtual resource, and a type-related increment in the virtual resource.

The determination module 201 is configured to determine a preset amount of virtual resource as the basic increment in the virtual resource; or reduce the preset amount according to the preset amount and a preset reduction rule, and determine the reduced preset amount of virtual resource as the basic increment in the virtual resource.

The determination module 201 is configured to perform, according to published works in the blockchain, an originality analysis on the target work to obtain an originality representation value corresponding to the target work, wherein the originality representation value is positively correlated to a degree of originality of the target work; determine, according to the originality representation value and the basic increment in the virtual resource, the originality-related increment in the virtual resource, wherein the originality representation value is positively correlated to the originality-related increment in the virtual resource, and the basic increment in the virtual resource is positively correlated to the originality-related increment in the virtual resource.

The determination module 201 is configured to obtain a score for representing a creation level of the target work, wherein the score is positively correlated to the creation level of the target work; determine, according to the score and the basic increment in the virtual resource, the level-related increment in the virtual resource; wherein the score is positively correlated to the level-related increment in the virtual resource, and the basic increment in the virtual resource is positively correlated to the level-related increment in the virtual resource.

The determination module 201 is configured to analyze, on the basis of a preset evaluation rule, the creation level of the target work to obtain the score corresponding to the target work; or analyze, on the basis of a pre-trained evaluation model, the creation level of the target work to obtain the score corresponding to the target work; or obtain the score corresponding to the target work specified by a work evaluator.

The determination module 201 is configured to determine a work type corresponding to the target work as a target work type; according to a preset corresponding relationship between work types and resource amounts, determine a resource amount corresponding to the target work type as a target resource amount; and determine the target resource amount of virtual resource as the type-related increment in the virtual resource.

The device further includes a resource amount adjustment module 204 configured to receive a resource amount adjustment instruction; and adjust, according to the resource amount adjustment instruction, a resource amount corresponding to at least one work type.

The determination module 201 is configured to, if the originality-related increment in the virtual resource and the level-related increment in the virtual resource are determined, determine a work type corresponding to the target work as a target work type; determine, according to a preset corresponding relationship between work types and coefficients, a coefficient corresponding to the target work type as a target coefficient; and multiply a sum of the originality-related increment in the virtual resource and the level-related increment in the virtual resource by the target coefficient to obtain the type-related increment in the virtual resource.

The device further includes a coefficient adjustment module 205 configured to receive a coefficient adjustment instruction; and adjust, according to the coefficient adjustment instruction, a coefficient corresponding to at least one work type.

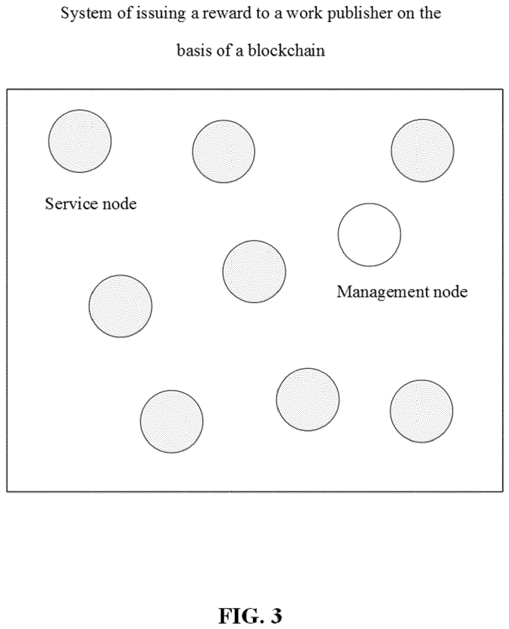

Based on the method of issuing the reward to the work publisher shown in FIG. 1, the embodiment of the present application further provides a blockchain-based system of issuing a reward to a work publisher, as illustrated in FIG. 3, the system includes a blockchain network at least consisting of a plurality of service nodes, wherein the service nodes have authorities to publish works to the blockchain, and a virtual resource is used as a transfer medium among the plurality of service nodes to conduct copyright-related transfers;

any one node in the blockchain network determines an increment in the virtual resource, when it is monitored that a target node publishes a target work to the blockchain; the target node being any one node in the blockchain network is configured to construct a publisher reward transfer based on a node identification of the target node and the determined increment in the virtual resource; and broadcast the publisher reward transfer to the blockchain network;

after a plurality of nodes in the blockchain network pass a consensus verification of the publisher reward transfer, a corresponding relationship between the node identification and the determined increment in the virtual resource is established and stored in a blockchain.

Further, the blockchain network also includes a management node.

The embodiment of the present application further provides a computer apparatus, which at least includes a memory, a processor and a computer program stored on the memory and executable by the processor, wherein the processor executes the program to implement the method illustrated in FIG. 1.

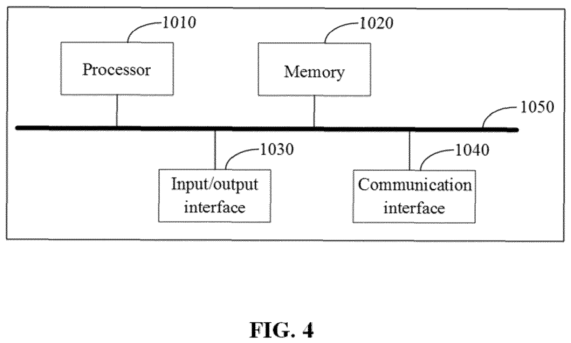

FIG. 4 illustrates a structural schematic diagram of hardware of the more specific computer apparatus provided by the embodiment of the present application. The apparatus may include a process 1010, a memory 1020, an input/output interface 1030, a communication interface 1040, and a bus 1050. The processor 1010, the memory 1020, the input/output interface 1030 and the communication interface 1040 are communicatively connected with each other within the apparatus through the bus 1050.

The processor 1010 may be implemented by adopting a general-purpose CPU (Central Processing Unit), a microprocessor, an ASIC (Application Specific Integrated Circuit), or one or more integrated circuits, etc., for executing related programs to realize the technical solution provided by the embodiment of the present application.

The memory 1020 may be implemented by adopting an ROM (Read Only Memory), an RAM (Random Access Memory), a static memory device, a dynamic memory device, etc. The memory 1020 may store an operating system and other application programs. When the technical solution provided by the embodiment of the present application is implemented by means of software or firmware, relevant program codes are stored in the memory 1020 and are called and executed by the processor 1010.

The input/output interface 1030 is used to connect with an input/output module for information input and output. The input/output module may be configured as a component in an apparatus (not shown), or may be externally connected to an apparatus to provide corresponding functions. Input apparatuses may include keyboards, mice, touch screens, microphones, various sensors, etc. Output apparatuses may include displays, speakers, vibrators, indicator lights, etc.

The communication interface 1040 is used to connect with a communication module (not shown) to realize the communication interaction between the apparatus and other apparatuses. The communication module may realize communication through a wired mode (for example, USB, network cable, etc.), and may also realize communication through a wireless mode (for example, mobile network, WiFi, Bluetooth, etc.).

The bus 1050 includes a path to transmit information between various components of the apparatus, such as the processor 1010, the memory 1020, the input/output interface 1030, and the communication interface 1040.

It should be noted that, although the processor 1010, the memory 1020, the input/output interface 1030, the communication interface 1040 and the bus 1050 of the apparatus are illustrated only, in the specific implementation process, the apparatus may further include other components necessary for normal operation.

In addition, those skilled in the art can understand that the apparatus may only include components necessary to realize the technical solution provided by the embodiment of the present application, and does not necessarily include all components illustrated in the drawings.

The embodiment of the present application further provides a computer-readable storage medium on which a computer program is stored, and the program is executed by the processor to implement the method illustrated in FIG. 1.

The computer-readable medium includes permanent and non-permanent, movable and non-movable media that can achieve information storage by means of any methods or techniques. The information may be computer-readable instructions, data structures, modules of programs or other data. Examples of a storage medium of a computer include, but are not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible by a computing device. According to the definitions herein, the computer-readable medium does not include transitory computer-readable media (transitory media), such as a modulated data signal and a carrier wave.

From the description of the above embodiment, it can be seen that those skilled in the art can clearly understand that the embodiment of the present application can be implemented by means of software and a necessary general-purpose hardware platform. On the basis of such understanding, the technical solution provided by the embodiment of the present application or the part that contributes to the prior art may be embodied in the form of a software product. The computer software product may be stored in a storage medium, such as ROM/RAM, disk, optical disk, etc., and include several instructions used to enable a computer apparatus (which may be a personal computer, a server, a network apparatus, or the like) to execute the method described in each embodiment or some parts of each embodiment of the present application.

The system, method, module, or unit illustrated in the embodiments may be specifically implemented by a computer chip or an entity, or a product having a certain function. A typical implementation device is a computer, the specific form of a computer may be a personal computer, a laptop computer, a cellular telephone, a camera phone, a smartphone, a personal digital assistant, a media player, a navigation device, an email transceiver device, a gaming console, a tablet computer, a wearable device, or a combination of any of these devices.

Each embodiment of the present application is described in a progressive manner, and the same or similar sections between various embodiments are described with reference to each other, each of which is focused on the differences from other embodiments. In particular, for a device or apparatus embodiment, as it is substantially similar to the method embodiment, the description is simpler, and for the relevant part, a reference may be made to the part of the description of the method embodiment. The method embodiment described above is only exemplary, in which the modules described as discrete components may or may not be physically separated, and the functions of each module may be realized in the same or different software and/or hardware when the technical solution provided by the embodiment of the present application is implemented. Some or all modules may be selected to realize the purpose of the technical solution provided by the embodiment according to the actual needs. Those skilled in the art can understand and implement the present application without contributing any inventive labor.

What is described above is only the specific implementation mode of the embodiment of the present application. It should be pointed out that, with departing from the principle of the embodiment of the present application, those skilled in the art may make various improvements and modifications, which, however, should be regarded as included in the scope of protection of the present application.

## Claims

1. A method of issuing a reward to a work publisher on the basis of a blockchain, wherein a blockchain network comprises a plurality of service nodes, wherein the service nodes have authorities to publish works to the blockchain, wherein the plurality of service nodes use a virtual resource as a transfer medium to conduct copyright-related transfers, the method comprising:
when it is monitored that a target node publishes a target work to the blockchain, determining an increment in the virtual resource, wherein the target node is any of the service nodes;
constructing a publisher reward transfer on the basis of a node identification of the target node and the determined increment in the virtual resource; and
broadcasting the publisher reward transfer to the blockchain network, such that, after a plurality of nodes in the blockchain network pass a consensus verification of the publisher reward transfer, a corresponding relationship between the node identification and the determined increment in the virtual resource is established and stored in the blockchain.

2. The method according to claim 1, wherein determining the increment in the virtual resource specifically comprises:
determining a basic increment in the virtual resource; or
determining the basic increment in the virtual resource, and determining, on the basis of the target work, at least one of: an originality-related increment in the virtual resource, a level-related increment in the virtual resource, and a type-related increment in the virtual resource.

3. The method according to claim 2, wherein determining the basic increment in the virtual resource specifically comprises:
determining a preset amount of virtual resources as the basic increment in the virtual resource; or
reducing the preset amount according to the preset amount and a preset reduction rule, and determining the reduced preset amount of virtual resource as the basic increment in the virtual resource.

4. The method according to claim 2, wherein determining, on the basis of the target work, the originality-related increment in the virtual resource specifically comprises:
performing, according to published works in the blockchain, an originality analysis on the target work to obtain an originality representation value corresponding to the target work, wherein the originality representation value is positively correlated to a degree of originality of the target work;
determining, according to the originality representation value and the basic increment in the virtual resource, the originality-related increment in the virtual resource, wherein the originality representation value is positively correlated to the originality-related increment in the virtual resource, and the basic increment in the virtual resource is positively correlated to the originality-related increment in the virtual resource.

5. The method according to claim 2, wherein determining, on the basis of the target work, the level-related increment in the virtual resource specifically comprises:
obtaining a score for representing a creation level of the target work, wherein the score is positively correlated to the creation level of the target work;
determining, according to the score and the basic increment in the virtual resource, the level-related increment in the virtual resource, wherein the score is positively correlated to the level-related increment in the virtual resource, and the basic increment in the virtual resource is positively correlated to the level-related increment in the virtual resource.

6. The method according to claim 5, wherein obtaining the score corresponding to the target work specifically comprises:
analyzing, on the basis of a preset evaluation rule, the creation level of the target work to obtain the score corresponding to the target work; or
analyzing, on the basis of a pre-trained evaluation model, the creation level of the target work to obtain the score corresponding to the target work; or
obtaining the score corresponding to the target work specified by a work evaluator.

7. The method according to claim 2, wherein determining, on the basis of the target work, the type-related increment in the virtual resource specifically comprises:
determining a work type corresponding to the target work as a target work type;
determining, according to a preset corresponding relationship between work types and resource amounts, a resource amount corresponding to the target work type as a target resource amount; and
determining the target resource amount of virtual resource as the type-related increment in the virtual resource.

8. The method according to claim 7, further comprising:
receiving a resource amount adjustment instruction; and
adjusting, according to the resource amount adjustment instruction, a resource amount corresponding to at least one work type.

9. The method according to claim 2, wherein, if the originality-related increment in the virtual resource and the level-related increment in the virtual resource are determined, determining, on the basis of the target work, a type-related increment in the virtual resource specifically comprises:
determining a work type corresponding to the target work as a target work type;
determining, according to a preset corresponding relationship between work types and coefficients, a coefficient corresponding to the target work type as a target coefficient; and
multiplying a sum of the originality-related increment in the virtual resource and the level-related increment in the virtual resource by the target coefficient to obtain the type-related increment in the virtual resource.

10. The method according to claim 9, further comprising:
receiving a coefficient adjustment instruction; and
adjusting, according to the coefficient adjustment instruction, a coefficient corresponding to at least one work type.

11. A device of issuing a reward to a work publisher on the basis of a blockchain, wherein a blockchain network comprises a plurality of service nodes, wherein the service nodes have authorities to publish works to the blockchain, wherein the plurality of service nodes use a virtual resource as a transfer medium to conduct copyright-related transfers, and wherein the device is a node in the blockchain network; and
wherein the device comprises:
a determination module configured to, when it is monitored that a target node publishes a target work to the blockchain, determine an increment in the virtual resource, wherein the target node is any of the service nodes;
a construction module configured to construct a publisher reward transfer on the basis of a node identification of the target node and the determined increment in the virtual resource;
a broadcasting module configured to broadcast the publisher reward transfer to the blockchain network, such that, after a plurality of nodes in the blockchain network pass a consensus verification of the publisher reward transfer, a corresponding relationship between the node identification and the determined increment in the virtual resource is established and stored in the blockchain.

12. The device according to claim 11, wherein the determination module is configured to: determine a basic increment in the virtual resource; or determine the basic increment in the virtual resource, and determine, on the basis of the target work, at least one of: an originality-related increment in the virtual resource, a level-related increment in the virtual resource, and a type-related increment in the virtual resource.

13. The device according to claim 12, wherein the determination module is configured to determine a preset amount of virtual resource as the basic increment in the virtual resource; or reduce the preset amount according to the preset amount and a preset reduction rule, and determine the reduced preset amount of virtual resource as the basic increment in the virtual resource.

14. The device according to claim 12, wherein the determination module is configured to perform, according to published works in the blockchain, an originality analysis on the target work to obtain an originality representation value corresponding to the target work, wherein the originality representation value is positively correlated to a degree of originality of the target work; determine, according to the originality representation value and the basic increment in the virtual resource, the originality-related increment in the virtual resource, wherein the originality representation value is positively correlated to the originality-related increment in the virtual resource, and wherein the basic increment in the virtual resource is positively correlated to the originality-related increment in the virtual resource.

15. The device according to claim 12, wherein the determination module is configured to obtain a score for representing a creation level of the target work, wherein the score is positively correlated to the creation level of the target work; determine, according to the score and the basic increment in the virtual resource, the level-related increment in the virtual resource, wherein the score is positively correlated to the level-related increment in the virtual resource, and wherein the basic increment in the virtual resource is positively correlated to the level-related increment in the virtual resource.

16. The device according to claim 15, wherein the determination module is configured to analyze, on the basis of a preset evaluation rule, the creation level of the target work to obtain the score corresponding to the target work; or analyze, on the basis of a pre-trained evaluation model, the creation level of the target work to obtain the score corresponding to the target work; or obtain the score corresponding to the target work specified by a work evaluator.

17. The device according to claim 12, wherein the determination module is configured to determine a work type corresponding to the target work as a target work type; determine, according to a preset corresponding relationship between work types and resource amounts, a resource amount corresponding to the target work type as a target resource amount; and determine the target resource amount of virtual resource as the type-related increment in the virtual resource.

18. The device according to claim 17, further comprising:
a resource amount adjustment module, configured to receive a resource amount adjustment instruction; and adjust, according to the resource amount adjustment instruction, a resource amount corresponding to at least one work type.

19. The device according to claim 12, wherein the determination module is configured to, if the originality-related increment in the virtual resource and the level-related increment in the virtual resource are determined, determine a work type corresponding to the target work as a target work type; determine, according to a preset corresponding relationship between work types and coefficients, a coefficient corresponding to the target work type as a target coefficient; and multiply a sum of the originality-related increment in the virtual resource and the level-related increment in the virtual resource by the target coefficient to obtain the type-related increment in the virtual resource.

20. The device according to claim 19, further comprising:
a coefficient adjustment module configured to receive a coefficient adjustment instruction; and adjust, according to the coefficient adjustment instruction, a coefficient corresponding to at least one work type.

21. A system of issuing a reward to a work publisher on the basis of a blockchain, comprising a blockchain network at least consisting of a plurality of service nodes, wherein the service nodes have authorities to publish works to the blockchain, and wherein the plurality of service nodes use a virtual resource as a transfer medium to conduct copyright-related transfers;
any one node in the blockchain network is configured to, when it is monitored that a target node publishes a target work to the blockchain, determine an increment in the virtual resource; wherein the target node is any of the service nodes; construct a publisher reward transfer on the basis of a node identification of the target node and the determined increment in the virtual resource; and broadcast the publisher reward transfer to the blockchain network;
after a plurality of nodes in the blockchain network pass a consensus verification of the publisher reward transfer, a corresponding relationship between the node identification and the determined increment in the virtual resource is established and stored in a blockchain.

22. A computer apparatus, comprising a memory, a processor, and a computer program stored in the memory and executable by the processor, wherein the processor executes the program to implement the method according to any one of claims 1-10.
